Europäisches Patentamt

European Patent Office

Office européen des brevets

(11) Veröffentlichungsnummer: **0 260 643 B1**

(12) **EUROPÄISCHE PATENTSCHRIFT**

(45) Veröffentlichungstag der Patentschrift: **27.11.91**

(51) Int. Cl.5: **A01G 1/12, A01B 45/02**

(21) Anmeldenummer: **87113419.3**

(22) Anmeldetag: **14.09.87**

(54) Vertikutiermesser für ein Vertikutiergerät.

(30) Priorität: **15.09.86 DE 8624652 U**
**10.10.86 DE 8626966 U**

(43) Veröffentlichungstag der Anmeldung:
**23.03.88 Patentblatt 88/12**

(45) Bekanntmachung des Hinweises auf die
Patenterteilung:
**27.11.91 Patentblatt 91/48**

(84) Benannte Vertragsstaaten:
**AT BE CH DE ES FR IT LI NL SE**

(56) Entgegenhaltungen:
**CH-A- 623 716**
**DE-B- 1 296 866**
**DE-U- 8 207 098**

(73) Patentinhaber: **Wolf-Geräte GmbH**
**Gregor-Wolf-Strasse 16 Postfach 860 und**
**880**
**W-5240 Betzdorf/Sieg(DE)**

(72) Erfinder: **Held, Peter, Dipl.-Ing.**
**Fichteweg 3**
**W-5240 Betzdorf(DE)**

(74) Vertreter: **Koch, Günther, Dipl.-Ing. Patentan-**
**wälte Wallach, Koch, Dr. Haibach, Feldkamp**
**et al**
**P.O. Box 121120**
**W-8000 München 12(DE)**

## Beschreibung

Die Erfindung betrifft ein als symmetrisches Doppelmesser ausgebildetes Vertikutiermesser für ein Vertikutiergerät, bestehend aus einem zwei kongruente Einzelmesser bildenden Flacheisen mit einem zentralen, polygonalen Loch zum Aufstecken auf die Messerwelle, wobei jedes Einzelmesser eine gegenüber der Vorlaufkante abgeknickte, nach vorne gerichtete Schneidkante mit äußerer Schneidspitze und eine Nachlaufkante aufweist, die über eine abgeknickte Abschrägung in die Schneidspitze übergeht.

Derartige Vertikutiermesser finden bei manuell oder motorisch angetriebenen Vertikutiergeräten Anwendung, die die Belüftung des Rasens erleichtern und den Neuwuchs fördern, indem verfilzte und abgestorbene Pflanzenteile ausgeworfen werden.

Die relativ schnell umlaufenden, in das Erdreich eindringenden Vertikutiermesser sind einer starken Abnutzung unterworfen, insbesondere wenn sie auf steinigem Boden arbeiten müssen. Bei einem gattungsgemäßen Vertikutiermesser, welches in der CH-A-623 716 beschrieben ist, sind die kurzen Außenseiten des Stahlblattes von der Schneidspitze ausgehend in Richtung zum Zentrum abgekrümmt und als hinterarbeitete Krummschneiden geformt. Der Radius der Schneidenkrümmung beträgt etwa die halbe Länge des gesamten Stahlblattes. Bei derartigen Vertikutiermessern erfolgt durch die Abnutzung ebenso wie bei bekannten parallelogrammförmig ausgebildeten Vertikutiermessern eine Abrundung der Schneidspitze, was die Schneidleistung und das Auswurfvermögen beeinträchtigt.

Der Erfindung liegt daher die Aufgabe zugrunde, ein gattungsgemäßes Vertikutiermesser derart zu verbessern, daß Schneidleistung und Auswurfvermögen auch nach der unvermeidbaren Abnutzung der Messer erhalten bleiben.

Gelöst wird die gestellte Aufgabe durch die im Kennzeichnungsteil des Patentanspruchs 1 angegebenen Merkmale.

Durch die Erfindunng wird erreicht, daß die für das Einschneiden im Boden wichtige Schneidspitze bzw. Schneidkante und der Auswurfteil des Messers auch nach längerer Benutzung erhalten bleiben. Zwischen der Schneidkante und der an die Schneidspitze in Umlaufrichtung nach hinten anschließende Kante verbleibt zwischen dieser und der Schneidkante ständig ein Winkel von weniger als 90°, was für die Arbeitsweise der Messer, wie sich gezeigt hat, von entscheidender Bedeutung ist.

Unterstützt wird die angestrebte Wirkung durch die im Anspruch 2 gekennzeichnete geometrische Ausbildung, was dazu beiträgt, daß der auf dieser Messergeometrie beruhende Grastransport im wesentlichen unabhängig von der Oberflächenbeschaffenheit der Messerkanten wird. Diese Geometrie des Arbeitsbereichs bleibt auch nach Abnutzung erhalten.

Gemäß einer in Anspruch 3 gekennzeichneten Weiterbildung können neue Ersatzmesser montiert werden, ohne daß es notwendig wäre, den Messerträger von der Messerwelle zu demontieren, weil die Vertikutiermesser, die fest auf der Welle sitzen, gleichzeitig als Messerträger für die Ersatzmesser dienen. Das hat den Vorteil, daß bei der Serienmontage keine Messerträger montiert zu werden brauchen, und es müssen an diese keine Messer angeschraubt werden. Der Kunde kann das Ersatzmesser selbst montieren, während bei bekannten Geräten die Walze ausgebaut werden mußte, weil die Messer auf die Vertikutierwelle aufgeschoben sind.

Nachstehend wird ein Ausführungsbeispiel der Erfindung anhand der Zeichnung beschrieben. In der Zeichnung zeigen:

Fig. 1    eine Ansicht eines Vertikutiermessers im Ursprungszustand,

Fig. 2    das aus Fig. 1 ersichtliche Messer in unterschiedlichen Abnutzungsstufen,

Fig. 3    eine Ansicht des in Fig. 1 dargestellten Messers mit zwei seitlich angefügten Ersatzmessern,

Fig. 4    eine Einzelansicht eines Ersatzmessers,

Fig. 5    eine Ansicht des Ersatzmessers gemäß Fig. 4 in Richtung des Pfeiles V betrachtet,

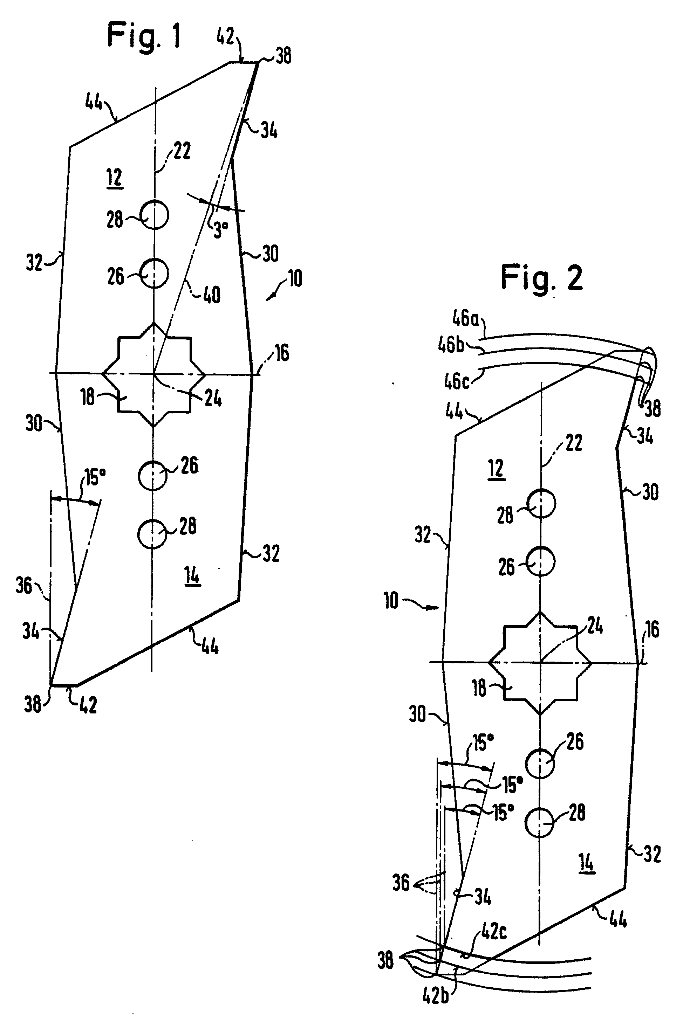

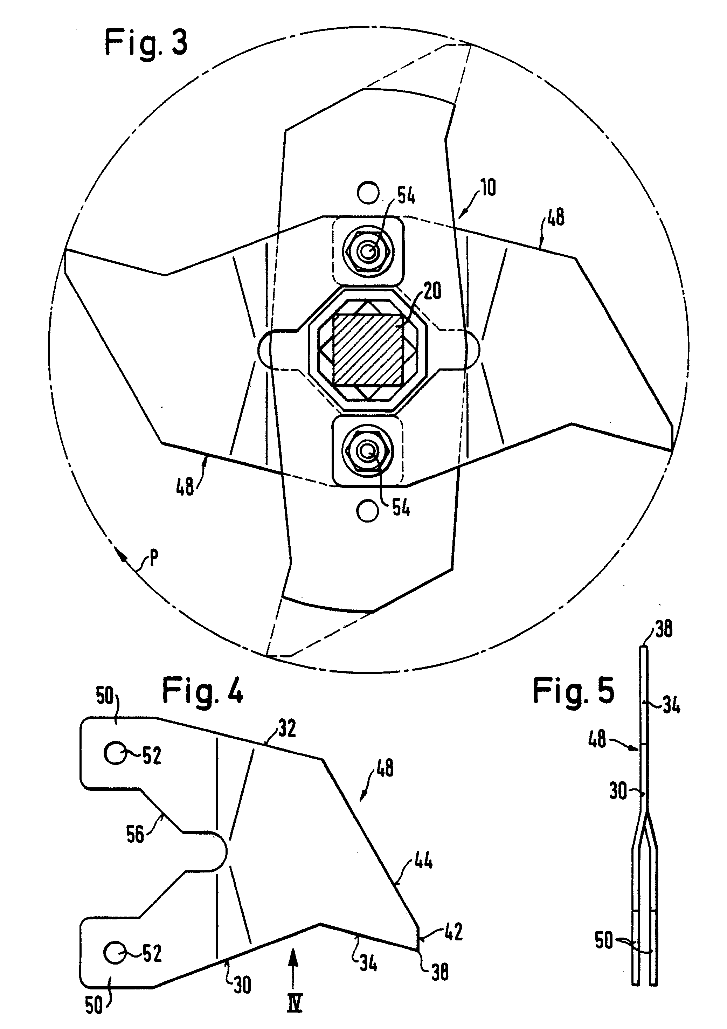

Das Doppelmesser 10 gemäß Fig. 1 besteht aus einem Flacheisen mit zwei kongruenten Einzelmessern 12 und 14, die an ihrer die quermittellinie bildenden Basis 16 verbunden sind. Ein zentrales, polygonales Loch 18 dient zum Aufstecken auf die Messerwelle 20 (Fig. 3), auf der das Messer durch nicht dargestellte Mittel gesichert ist. In der Längsmittellinie 22 des Doppelmessers sind im gleichen Abstand vom Mittelpunkt 24 zwei Löcher 26 und wiederum im gleichen Abstand vom Mittelpunkt zwei weitere Löcher 28 angeordnet. Die Vorlaufkante 30 der beiden Messer verläuft etwa im gleichen Winkel wie die Nachlaufkante 32 von der Basis 16 aus auf die Längsmittellinie 22 zu, d. h. die Messer verjüngen sich nach außen hin. Die Vorlaufkante 30 geht über einen stumpfen Winkel in eine Schneidkante 34 über, die in einem Winkel von ca. 15° gegenüber der Längsmittellinie 22 bzw. einer parallel hierzu liegenden Linie 36 angestellt ist. Die Schneidkante 34 endet in einer Schneidspitze 38. Der Radiusstrahl 40 durch die Schneidspitze 38 schließt, wie aus Fig. 1 ersichtlich, gegenüber der Schneidkante 34 einen Winkel von 3° ein. An die Schneidspitze 38 schließt sich eine Kante 42 an, die im wesentlichen parallel zur Basislinie 16 verläuft. Das Ende dieser Kante 42 geht über eine Abschrägung 44 in die Nachlaufkante 32 über.

Auf Fig. 2 sind zwei Abnutzungsstufen ersichtlich. Dazu sind um den Mittelpunkt 24 drei Kreisbögen 46a, 46b und 46c geschlagen. Der äußere Kreisbogen 46a durchläuft die beiden Schneidspitzen 38 des unbenutzten Messers. Infolge der Drehung des Messers um den Mittelpunkt 24 erfolgt eine Abnutzung im wesentlichen längs der um den Mittelpunkt 24 geschlagenen Kreisbögen. Durch Abnutzung verändert sich das Spitzenprofil des Messers in der aus Fig. 2 ersichtlichen Weise. Die Kante 42 geht nach einer ersten Abnutzungsstufe in eine Kante 42b über, die einen Teil des Kreisbogens 46b bildet. Bei weiterer Abnutzung geht die Kante in einen Kreisbogenabschnitt 42c über, der auf dem Kreisbogen 46c liegt. Trotz der erfolgten Abnutzung bleibt jedoch der 15°-Winkel zwischen Schneidkante 34 und Mittellinie 22 erhalten und zwischen Schneidkante 34 und der Kante 42 bleibt ständig ein Winkel von weniger als 90°, so daß unabhängig vom Abnutzungsgrad ständig ein einwandfreier Schneid- und Auswurfvorgang gewährleistet bleibt, jedenfalls so lange wie die Kante 42 noch auf der Schneidkante 34 liegt.

Nachdem die Doppelmesser über die Kante 42 hinaus soweit abgenutzt sind, daß ein einwandfreies Arbeiten nicht mehr gewährleistet ist können an diesen auf der Welle 20 verbleibenden Doppelmesser 10 Ersatzmesser 48 gemäß Fig. 4 und 5 festgelegt werden. Diese Ersatzmesser sind den beiden Messern 12, 14 des Doppelmessers deckungsgleich, so weit es die äußeren Abschnitte mit den Kanten 32, 44, 42, 34 und 30 anbetrifft. Im Basisteil sind die Ersatzmesser mit seitlich abgekröpften Schenkeln 50 versehen, die je ein Lock 52 aufweisen, die einen gleichen gegenseitigen Abstand besitzen wie die Löcher 26 des Doppelmessers. Daher können die Ersatzmesser mittels Schraubbolzen 54 am Doppelmesser festgelegt und nach Abnutzung wiederum ausgetauscht werden, ohne daß es erforderlich wäre, den Messerträger, d. h. das abgenutzte Doppelmesser von der Welle zu entfernen.

Die Abnutzung der Ersatzmesser erfolgt in gleicher Weise wie in Fig. 2 bei dem Doppelmesser dargestellt. Die Welle 20 dreht sich gemäß Fig. 3 im Uhrzeigersinn, und die Messer laufen demgemäß in Richtung des Pfeiles P um.

Um eine Befestigung zu ermöglichen, sind die Ersatzmesser im inneren Teil mit einer entsprechend geformten Ausnehmung 56 versehen.

## Patentansprüche

1. Als symmetrisches Doppelmesser ausgebildetes Vertikutiermesser (10) für ein Vertikutiergerät, bestehend aus einem zwei kongruente Einzelmesser (12, 14) bildenden Flacheisen mit einem zentralen, polygonalen Loch (18) zum Aufstecken auf die Messerwelle, wobei jedes Einzelmesser (12, 14) eine gegenüber der Vorlaufkante (30) abgeknickte, in Umlaufrichtung nach vorn gerichtete Schneidkante (34) mit äußerer Schneidspitze (38) und eine Nachlaufkante (32) aufweist, die über eine abgeknickte Abschrägung (44) in die Schneidspitze (38) übergeht, dadurch gekennzeichnet, daß an die den radial äußersten Punkt der Schneidkante (34) bildende Schneidspitze (38) in Umlaufrichtung nach hinten eine Kante (42) anschließt, die im wesentlichen parallel zu der Querachse (16) zwischen den beiden Einzelmessern (12, 14) verläuft und in die Abschrägung (44) übergeht.

2. Vertikutiermesser nach Anspruch 1, dadurch gekennzeichnet, daß der Winkel zwischen Schneidkante (34) und der Tangente eines Kreisbogens (46) um den Rotationsmittelpunkt (24) ca. 90° oder weniger beträgt, daß der Auswurfwinkel zwischen der Schneidkante (34) und dem Boden bei senkrecht unterhalb der Drehachse (24) liegender Schneidspitze (38) 90° oder mehr beträgt, daß der Winkel zwischen der Schneidkante (34) und der Längsmittellinie (22) des Vertikutiermessers ca. 15° beträgt und daß der Winkel zwischen der Schneidkante (34) und einem durch die Schneidspitze (38) gehenden Radiusstrahl (40) ca. 3° beträgt.

3. Vertikutiermesser nach Anspruch 1, dadurch gekennzeichnet, daß das Doppelmesser (10) als Träger für Ersatzmesser (48) vorgesehen ist, die auf beiden Seiten des Doppelmessers im Winkel von 90° zu diesem festlegbar sind.

4. Vertikutiermesser nach Anspruch 3, dadurch gekennzeichnet, daß das Doppelmesser (10) in der Längsmittellinie (22) Befestigungslöcher (26) aufweist, über die Ersatzmesser (48) mit Bolzen festlegbar sind, wobei die Ersatzmesser (48) gegensinnig abgekröpfte Schenkel (50) aufweisen, mit denen sie beidseitig des Doppelmessers mittels Schraubenbolzen (54) an diesen festlegbar sind.

## Claims

1. Vertical cutting blade (10) formed as symmetrical double blade for an aerator consisting of a flat iron which forms two congruent individual blades (12, 14) and has a central polygonal hole (18) for fitting onto the blade shaft, each individual blade (12, 14) having a cutting edge (34) which is bent with respect to the leading edge (30), is forwardly directed in the circumferential direction and has an outer cutting tip (38) and a trailing edge (32) which merges via a bent chamfer (44) into the cutting tip (38), characterized in that the cutting tip (38) forming the radially outermost point of the cutting edge (34) is adjoined in the circumferential direction rearwardly by an edge (42) which extends substantially parallel to the transverse axis (16) between the two individual blades (12, 14) and merges into the chamfer (44).

2. Vertical cutting blade according to claim 1, characterized in that the angle between the cutting edge (34) and the tangent of an arc (46) around the rotation centre point (24) is about 90° or less, that the ejection angle between the cutting edge (34) and the ground with the cutting tip (38) lying perpendicularly beneath the rotation axis (24) is 90° or more, that the angle between the cutting edge (34) and the longitudinal centre line (22) of the vertical cutting blade is about 15° and that the angle between the cutting edge (34) and a radius line (40) passing through the cutting tip (38) is about 3°.

3. Vertical cutting blade according to claim 1, characterized in that the double blade (10) is provided as carrier for substitute blades (48) which can be secured to the double blade on both sides thereof at an angle of 90°.

4. Vertical cutting blade according to claim 3, characterized in that the double blade (10) comprises in the longitudinal centre line (22) mounting holes (26) via which the substitute blades (48) can be fixed with bolts, the substitute blades (48) having oppositely bent legs (50) with which they can be secured to the double blade on both sides thereof by means of threaded bolts (54).

**Revendications**

1. Lame de scarification (10) pour un scarificateur, réalisée sous la forme d'une double lame symétrique constituée d'un fer plat qui forme deux lames individuelles (12, 14) complémentaires et spéculaires, et est percé d'un trou polygonal central (18) en vue de l'emboîtement sur l'arbre porte-lame, chaque lame individuelle (12, 14) comprenant une arête de coupe (34) dirigée vers l'avant dans le sens de rotation, inclinée par rapport au bord d'attaque (30) et munie d'une pointe tranchante externe (38), ainsi qu'un bord de fuite (32) fusionnant dans la pointe tranchante (38) par l'intermédiaire d'un biseau (44), caractérisée par le fait qu'une arête (42) se rattachant vers l'arrière, dans le sens de rotation, à la pointe tranchante (38) matérialisant le point radialement le plus externe de l'arête de coupe (34), s'étend pour l'essentiel parallèlement à l'axe transversal (16), entre les deux lames individuelles (12, 14), et fusionne dans le biseau (44).

2. Lame de scarification selon la revendication 1, caractérisée par le fait que l'angle, entre l'arête de coupe (34) et la tangente à un arc de cercle (46) autour du centre de rotation (24), mesure environ 90° ou moins ; par le fait que l'angle d'éjection, entre l'arête de coupe (34) et le sol, mesure 90° ou plus lorsque la pointe tranchante (38) occupe une position verticale au-dessous de l'axe de rotation (24) ; par le fait que l'angle, entre l'arête de coupe (34) et la ligne médiane longitudinale (22) de la lame de scarification, mesure environ 15° ; et par le fait que l'angle, entre l'arête de coupe (34) et un rayon (40) passant par la pointe tranchante (38), mesure environ 3°.

3. Lame de scarification selon la revendication 1, caractérisée par le fait que la double lame (10) est prévue en tant que support de lames de rechange (48) verrouillables à demeure, des deux côtés de la double lame, selon un angle de 90° par rapport à cette dernière.

4. Lame de scarification selon la revendication 3, caractérisée par le fait que la double lame (10) comporte, sur la ligne médiane longitudinale (22), des trous de fixation (26) par l'intermédiaire desquels des lames de rechange (48) peuvent être consignées à demeure par des boulons, les lames de rechange (48) présentant des branches (50) coudées dans des sens opposés, par lesquelles elles peuvent être bloquées de part et d'autre de la double lame, au moyen de boulons (54).

## Fig. 1

## Fig. 2

**Fig. 3**

**Fig. 4**

**Fig. 5**